# FASCICULE DE BREVET EUROPEEN

(11) **EP 2 857 912 B1**
(45) Date de publication et mention de la délivrance du brevet: **02.01.2019**
(21) Numéro de dépôt: 14187765.4
(22) Date de dépôt: 06.10.2014
(51) Int. Cl.: G05B 19/042, H04L 29/12, H04L 12/24

(54) **DISPOSITIF DE CONFIGURATION D'EQUIPEMENTS ETHERNET ET PROCÉDÉ DE CONFIGURATION D'ÉQUIPEMENTS ETHERNET À L'AIDE D'UN TEL DISPOSITIF**
KONFIGURIERUNGSVORRICHTUNG FÜR ETHERNETGERÄTE UND KONFIGURIERUNGSVERFAHREN ZUR KONFIGURIEREUNG VON ETHERNETGERÄTEN UNTER VERWENDUNG DER KONFIGURIERUNGSVORRICHTUNG
CONFIGURATION DEVICE FOR ETHERNET EQUIPMENT AND CONFIGURATION METHOD FOR CONFIGURING ETHERNET DEVICES USING THAT DEVICE

(30) Priorité: 07.10.2013 FR 1359706
(43) Date de publication de la demande: 08.04.2015
(73) Titulaire: Schneider Electric Industries SAS, 92500 Rueil-Malmaison (FR)
(72) Inventeur: Chiche, Thierry, 38050 Grenoble Cedex 09 (FR); Hampikian, Pascal, 38050 Grenoble Cedex 09 (FR); Ye, Jun, 38050 Grenoble Cedex 09 (FR)
(74) Mandataire: Lavoix

(56) Documents cités:
- EP-A1- 1 686 767
- US-A1- 2003 061 384
- US-A1- 2005 220 075
- US-A1- 2005 256 939
- US-A1- 2007 041 388
- US-A1- 2008 133 721
- US-A1- 2009 164 668
- MICHEL BAUD ET AL: "Profinet IO-Device Emulator based on the Man-in-the-middle Attack", EMERGING TECHNOLOGIES AND FACTORY AUTOMATION, 2006. ETFA '06. IEE E CONFERENCE ON, IEEE, PI, 1 septembre 2006 (2006-09-01), pages 437-440, XP031082749, ISBN: 978-0-7803-9758-3
- AKERBERG J ET AL: "Introducing security modules in PROFINET IO", EMERGING TECHNOLOGIES&FACTORY AUTOMATION, 2009. ETFA 2009. IEEE CONFERENCE ON, IEEE, PISCATAWAY, NJ, USA, 22 septembre 2009 (2009-09-22), pages 1-8, XP031575771, ISBN: 978-1-4244-2727-7
- ALEXANDER SILICON GRAPHICS S ET AL: "DHCP Options and BOOTP Vendor Extensions; rfc2132.txt", DHCP OPTIONS AND BOOTP VENDOR EXTENSIONS; RFC2132.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 1997 (1997-03-01), XP015007916,
- DROMS BUCKNELL UNIVERSITY R: "Dynamic Host Configuration Protocol; rfc2131.txt", DYNAMIC HOST CONFIGURATION PROTOCOL; RFC2131.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 1997 (1997-03-01), XP015007915,

## Description

La présente invention concerne un dispositif de configuration de plusieurs équipements, chaque équipement disposant d'un connecteur Ethernet, et le dispositif comprenant un connecteur Ethernet complémentaire propre à être connecté successivement au connecteur Ethernet de chaque équipement.

L'invention concerne également un procédé de configuration de plusieurs équipements disposant chacun d'un connecteur Ethernet, à l'aide d'un tel dispositif de configuration.

Dans le domaine de la configuration d'équipements disposant d'une connectivité Ethernet filaire et destinés à être connectés par la suite sur un même réseau de communication, il est connu, par exemple de US 2007/041388 A1, d'utiliser un ordinateur qu'un opérateur branche tour à tour sur chaque équipement. L'opérateur lance alors sur l'ordinateur, suite à la connexion de l'ordinateur à chaque équipement, un logiciel de programmation et effectue par lui-même la configuration de chaque équipement. La configuration de chaque équipement est réalisée généralement : en configurant manuellement l'adresse IP de l'ordinateur utilisé en conformité avec l'adresse IP de l'équipement auquel il est connecté, en rentrant l'adresse IP courante de l'équipement dans le logiciel de programmation afin d'activer la communication entre l'ordinateur et l'équipement correspondant, et en affectant manuellement des programmes de configuration et une nouvelle adresse à l'équipement correspondant, afin que son adresse IP soit adaptée au réseau auquel l'équipement est destiné à être connecté. Cette opération est ainsi répétée pour chaque équipement et la configuration de tous les équipements est donc particulièrement longue et fastidieuse. De plus, l'affectation de l'adresse IP pour chaque équipement étant effectuée manuellement, l'unicité de l'adresse IP des équipements Ethernet n'est pas assurée.

Il est également connu d'utiliser un serveur d'adresse IP automatique, tel qu'un serveur DHCP (de l'anglais : Dynamic Host Configuration Protocol), afin d'affecter une adresse IP à chaque équipement que l'on souhaite connecter à un même réseau. Cependant, cette méthode nécessite l'établissement d'une table prédéfinie d'adresse IP au niveau du serveur DHCP, qui alloue les adresses IP par reconnaissance de chaque équipement qui fait la demande d'une adresse IP. Ainsi, suivant cette méthode, la mise en place d'un serveur DHCP est nécessaire, et chaque équipement doit être propre à faire la demande d'une adresse IP au serveur DHCP. Plus précisément, cette méthode implique que le réseau sur lequel sont connectés les équipements soit opérationnel, que le serveur DHCP soit connecté et configuré et que chaque équipement dispose d'un identifiant unique partagé avec le serveur DHCP utilisé lors de l'affectation de l'adresse IP par le serveur DHCP. Ceci est réalisé par l'utilisation de mécanisme physique de type roue codeuse ou par configuration unitaire de chaque équipement avec un identifiant unique et partagé avec le serveur DHCP, ce qui rend cette opération longue et complexe et nécessite l'utilisation d'un ordinateur. Un serveur présentant de tels inconvénients est connu des documents US 2008/0133721 et US 2009/164668 A1.

Le but de l'invention est d'affecter de manière simple une adresse IP à un ou des équipements Ethernet destinés à appartenir à un réseau, notamment sans utiliser des outils dédiés de configuration des adresses IP des équipements impliquant l'usage d'un ordinateur ou d'une tablette, et sans constitution physique préalable du réseau. L'objectif de l'invention est de proposer un dispositif de configuration de plusieurs équipements Ethernet, qui permet de réaliser une configuration des équipements Ethernet, de manière unitaire, simple et rapide

A cet effet, l'invention a pour objet un dispositif de configuration selon la revendication 1.

Grâce à l'invention, des paramètres réseau de référence et notamment une adresse IP garantie unique, sont téléchargés dans chaque équipement, suite à la connexion du dispositif de configuration successivement avec chaque équipement, et ceci sans autre manipulation de la part d'un opérateur que la seule connexion du dispositif de configuration à chaque équipement. De plus, les paramètres réseau de référence sont automatiquement attribués suite à chaque connexion du dispositif à l'un des équipements et l'adresse IP attribuée étant unique pour chaque équipement, ceci permet d'assurer l'unicité de l'adresse IP configurée sur chaque équipement. Par ailleurs, le moyen de détection permet de détecter la connexion du dispositif à l'un des équipements de manière automatique, sans pré-configuration du dispositif.

A la différence de l'utilisation d'un serveur DHCP, le dispositif selon l'invention attribue automatiquement, après sa connexion à l'équipement correspondant, une adresse IP unique à l'équipement, sans que celui-ci ait à envoyer une requête de demande d'adresse IP au dispositif. De plus, l'utilisation d'un serveur DHCP nécessite, préalablement à la connexion du dispositif aux équipements, d'associer à chaque adresse IP un identifiant unique, sous forme alphanumérique, de l'équipement correspondant, ce qui implique impérativement l'usage d'un équipement logique supplémentaire, une configuration obligatoire de cette équipement et une affectation de l'identifiant unique à chaque équipement correspondant.

Selon des aspects avantageux de l'invention, le dispositif de configuration comprend en outre une ou plusieurs des caractéristiques optionnelles des revendications 2 à 7.

L'invention a également pour objet un procédé de configuration selon la revendication 8.

Suivant d'autres aspects avantageux de l'invention, le procédé de configuration comprend une ou plusieurs des caractéristiques optionnelles des revendications 9 à 13.

L'invention sera mieux comprise et d'autres avantages de celle-ci apparaîtront plus clairement à la lumière de la description qui va suivre, donnée uniquement à titre d'exemple non limitatif, et faite en se référant aux dessins sur lesquels :
- la figure 1 est une représentation schématique de plusieurs équipements destinés à appartenir à un même réseau et d'un dispositif de configuration, conforme à l'invention, connecté à l'un des équipements ;
- la figure 2 est un organigramme des étapes d'un procédé de configuration de plusieurs équipements disposant d'un connecteur Ethernet, selon un premier mode de réalisation de l'invention; et
- la figure 3 est un organigramme des étapes d'un procédé de configuration de plusieurs équipements disposant d'un connecteur Ethernet, selon un deuxième mode de réalisation de l'invention.

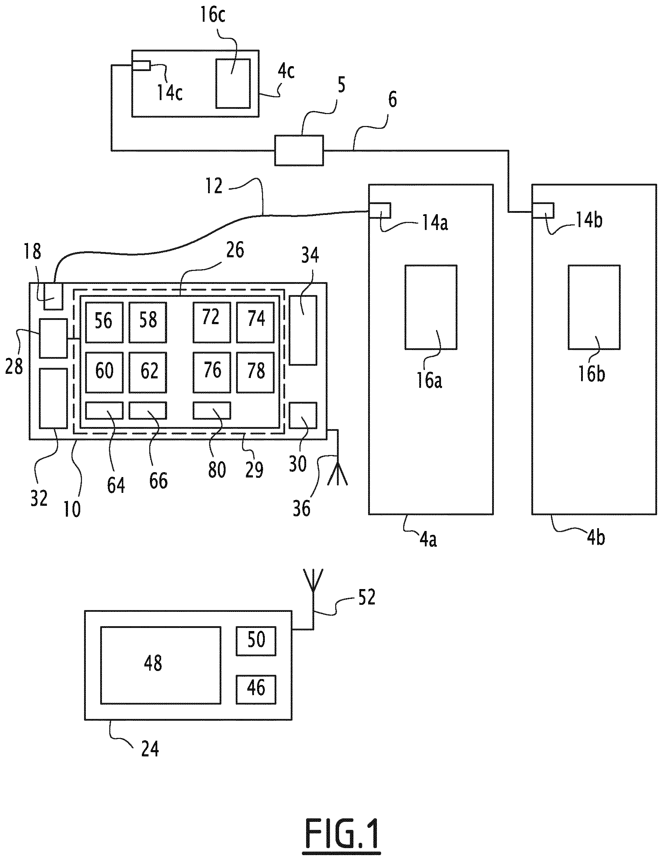

Sur la figure 1, un premier 4a et un deuxième 4b équipements sont représentés et sont destinés à être reliés via un commutateur réseau 5 à un troisième équipement 4c de contrôle des premier 4a et deuxième 4b équipements, afin que les équipements 4a, 4b, 4c forment un réseau de communication une fois leur adresse IP respective configurée. Sur la représentation de la figure 1, uniquement le deuxième équipement 4b est relié au troisième équipement 4c via le commutateur 5 et une première liaison Ethernet 6.

De plus, un dispositif 10 de configuration des équipements 4a, 4b, 4c est représenté et est connecté au premier équipement 4a via une deuxième liaison Ethernet 12, entre le dispositif de configuration 10 et le premier équipement 4a. Plus précisément, le dispositif 10 est connecté à l'équipement correspondant via la liaison 12 qui est une liaison point à point.

Les premier, deuxième et troisième équipements 4a, 4b, 4c comprennent chacun un connecteur Ethernet 14a, 14b, 14c et une unité de traitement 16a, 16b, 16c.

Le troisième équipement 4c est, par exemple, un automate programmable industriel, propre à commander,les premier et deuxième équipements 4a, 4b, une fois les premier, deuxième et troisième équipements 4a, 4b, 4c configurés via le dispositif de configuration 10 et une fois que le premier équipement 4a est déconnecté du dispositif de configuration 10 et connecté au commutateur 5 via son connecteur 14a.

Le dispositif 10 comprend un connecteur Ethernet 18 de manière à ce que la liaison Ethernet 12 soit établie entre le connecteur complémentaire 18 et un des connecteurs 14a, 14b, 14c lors de la configuration des équipements 4a, 4b, 4c. Sur la figure 1, la liaison Ethernet 12 est disposée entre le connecteur complémentaire 18 et le connecteur 14a du premier équipement 4a.

Le dispositif 10 est propre à communiquer via une liaison radioélectrique avec un module 24 de configuration du dispositif.

Le dispositif 10 comprend une mémoire 26 et un processeur 28 associé à la mémoire 26, la mémoire 26 et le processeur 28 formant une unité de calcul 29. Le dispositif 10 comprend également un serveur 30 de données, une batterie 32, un émetteur/récepteur radioélectrique 34 et une antenne radioélectrique 36.

Les unités de traitement 16a, 16b, 16c sont propres à gérer le fonctionnement des équipements 4a, 4b, 4c et à recevoir des éléments de configuration de la part du dispositif 10.

Le module de configuration 24 comprend un organe d'affichage 46, un organe de traitement 48, un émetteur-récepteur radioélectrique 50 et une antenne radioélectrique 52.

En variante, le module de configuration 24 comprend un connecteur Ethernet non représenté et est relié au dispositif 10 via une liaison Ethernet.

La mémoire 26 est apte à stocker un logiciel 56 de téléchargement de paramètres réseau de référence sur chaque équipement 4a, 4b, 4c et plus généralement d'au moins un élément de configuration choisi parmi : les paramètres réseau de référence, un fichier de configuration et un ou des programmes destinés à être exécuté par les équipements 4a, 4b, 4c. Les paramètres réseaux de référence comprennent au moins une adresse IP unique pour chaque équipement 4a, 4b, 4c et sont également apte à inclure, par exemple, un masque de sous-réseau ou une passerelle par défaut.

La mémoire 26 est également apte à stocker un logiciel 58 de détection de la connexion du dispositif 10 à l'équipement 4a correspondant, auquel il est connecté, et un logiciel 60 d'attribution de l'adresse IP unique, à télécharger dans l'équipement correspondant à l'équipement auquel le dispositif 10 est connecté. Le logiciel d'attribution 60 est propre à garantir la prise en compte de l'adresse IP unique par l'équipement et le fait que l'adresse IP téléchargée dans chaque équipement est différente. Plus généralement, le logiciel d'attribution est propre à attribuer ledit ou lesdits éléments de configuration.

La mémoire 26 est également apte à stocker un premier logiciel 62 d'identification d'un indicateur associé à chaque équipement 4a, 4b, 4c et un deuxième logiciel 64 d'identification d'un identifiant de chaque équipement, ledit identifiant étant unique pour chaque équipement 4a, 4b, 4c.

La mémoire 26 est, de plus, apte à stocker un logiciel 66 de lecture de l'adresse IP unique, et plus généralement de lecture dudit ou desdits éléments de configuration, utilisés par l'équipement 4a auquel il est connecté, un premier logiciel 72 de mémorisation des paramètres réseau de référence et un logiciel 74 de gestion d'une table d'allocation comprenant ledit ou lesdits éléments de configuration pour chaque équipement 4a, 4b, 4c.

La mémoire 26 inclut également un deuxième logiciel 76 de mémorisation de chaque opération effectuée par le logiciel de téléchargement 56, un logiciel 78 de génération d'un fichier de configuration du serveur 30, un organe 80 d'export du fichier de configuration vers le serveur 30.

Le processeur 28 est propre à exécuter et à lancer les logiciels stockés dans la mémoire 26.

Le serveur 30 est propre, une fois configuré, à réaffecter à chaque équipement 4a, 4b, 4c, ledit ou lesdits éléments de configuration compris dans la table d'allocation et téléchargés grâce au logiciel de téléchargement 56 sur chaque équipement 4a, 4b, 4c.

La batterie 32 est propre à alimenter le dispositif 10 qui est ainsi mobile et autonome. En variante, le dispositif 10 est alimenté en courant via la liaison Ethernet 12.

L'émetteur-récepteur radioélectrique 34 et l'antenne radioélectrique 36 sont adaptés pour émettre des signaux radioélectriques à destination de l'émetteur-récepteur radioélectrique 50 et de l'antenne radioélectrique 52 du module de configuration 24. Ainsi, le dispositif 10 est connecté au module de configuration 24 par liaison radioélectrique.

L'organe d'affichage 46 est propre à afficher des informations, telles que les paramètres réseau, lus par le logiciel de lecture 66 et transmis par l'intermédiaire de l'émetteur-récepteur 34 et de l'antenne 36 au module de configuration 24. Plus généralement, l'organe d'affichage 46 est apte à afficher ledit ou lesdits éléments de configuration téléchargés sur chaque équipement 4a, 4b, 4c.

L'organe de traitement 48 est propre à sauvegarder la table d'allocation. La table d'allocation est, par exemple, téléchargée dans l'organe de traitement 48 via une connexion USB, WIFI, ou via l'antenne radioélectrique 52. L'organe de traitement 48 est propre à communiquer avec le dispositif 10 et à transférer au dispositif 10, et plus particulièrement au premier logiciel de mémorisation 72, ladite table d'allocation. L'organe de traitement 48 est également propre à définir et/ou sauvegarder les paramètres réseau de référence, la logique d'affectation automatique, c'est-à-dire par exemple une plage d'adresse IP par type d'équipement, le fichier de configuration et le ou les programmes téléchargés sur chaque équipement et transmis par le dispositif 10.

Le logiciel de téléchargement 56 est apte à télécharger les paramètres réseau de référence, mémorisés par le premier logiciel de mémorisation 72, sur chaque équipement 4a, 4b, 4c. Plus généralement, le logiciel de téléchargement 56 est propre à télécharger, dans l'équipement 4a auquel le dispositif 10 est connecté, ledit ou lesdits éléments de configuration contenus et définis dans la table d'allocation et correspondant à l'équipement 4a auquel le dispositif 10 est connecté.

Le logiciel de détection 58 est propre à détecter la connexion du dispositif 10 à l'équipement 4a auquel il est connecté, c'est-à-dire qu'il est propre à établir une communication via la liaison Ethernet 18 avec l'équipement 4a. Plus généralement, le logiciel de détection est propre à détecter la connexion du dispositif 10 à chaque équipement 4a, 4b, 4c auquel il est connecté.

Le logiciel d'attribution 60 est apte à attribuer, suite à chaque connexion du dispositif 10 à l'un des équipements 4a, 4b, 4c, l'adresse IP unique incluse dans la table d'allocation et plus précisément dans les paramètres réseau, et correspondant à l'équipement. Plus généralement, le logiciel d'attribution 60 est apte à attribuer à l'équipement 4a auquel le dispositif 10 est connecté ledit ou lesdits éléments destinés à être téléchargés sur l'équipement correspondant 4a. Ainsi, le logiciel d'attribution 60 est propre à attribuer ledit ou lesdits éléments à télécharger sur chaque équipement, en fonction de la table d'allocation et le logiciel de téléchargement est propre à télécharger sur l'équipement 4a auquel il est connecté ledit ou lesdits éléments attribués.

Le premier logiciel d'identification 62 est apte à identifier l'indicateur associé à l'équipement 4a, 4b, 4c auquel il est connecté, sachant que les éléments de configuration contenus dans la table d'allocation sont fonction de l'indicateur associé à chaque équipement. L'indicateur correspond par exemple au type de l'équipement 4a, 4b, 4c, c'est-à-dire qu'il permet par exemple de savoir si l'équipement est une interface homme-machine, ou un variateur de vitesse ou un servomoteur ou un autre type de capteur-actionneur industriel connectable sur un réseau Ethernet, ou encore un automate programmable. Ainsi, suivant l'indicateur identifié par le premier logiciel d'identification 62, le programme et les fichiers de configuration téléchargés par le logiciel de téléchargement 56 sur chaque équipement 4a, 4b, 4c diffèrent. Il apparaît ainsi, que pour des équipements ayant le même indicateur, les fichiers de configuration et programme téléchargés sont identiques et que le logiciel d'attribution 60 est propre à attribuer ledit ou lesdits éléments à télécharger sur chaque équipement, en fonction dudit indicateur.

Le deuxième logiciel d'identification 64 est apte à récupérer un identifiant de chaque équipement 4a, 4b, 4c par exemple une référence d'équipement comme un numéro de série associé à une famille d'équipement. Le deuxième logiciel d'identification 64 est également apte à vérifier que les éléments de configuration téléchargés sur l'équipement 4a, auquel le dispositif 10 est connecté ont bien été pris en compte et mémorisés par l'équipement 4a correspondant. Le deuxième logiciel d'identification est en complément propre à transmettre un signal à un opérateur afin de lui indiquer que les éléments de configuration ont bien été téléchargés sur ledit équipement 4a. L'opérateur sait alors que toute la séquence de téléchargement des paramètres réseaux s'est bien exécutée et qu'il peut alors retirer le câble de connexion dudit équipement 4a pour le connecter sur un nouvel équipement afin de le configurer à son tour. Ainsi, chaque opération effectuée par le logiciel de téléchargement 56 est propre à être associée à l'identifiant de l'équipement correspondant.

Le logiciel de lecture 66 est propre à lire et à récupérer les paramètres réseau et plus généralement, ledit ou lesdits éléments téléchargés sur chaque équipement.

En variante, le dispositif 10 comprend un moyen d'affichage, non représenté, propre à afficher les paramètres réseau lus par le logiciel de lecture 66.

Le premier logiciel de mémorisation 72 est apte à mémoriser la table d'allocation présentée ci-dessus.

Le logiciel de gestion 74 est propre à gérer la table d'allocation et à la modifier, par exemple, en fonction d'informations reçues de la part de l'organe de traitement 48.

Le deuxième logiciel de mémorisation 76 est propre à sauvegarder chaque opération effectuée par le moyen de téléchargement 56 et à générer un fichier de traçabilité des opérations effectuées. De plus, le deuxième logiciel de mémorisation 76 est propre à associer l'identifiant de l'équipement correspondant à chaque opération sauvegardée, et est propre à sauvegarder les éléments de configurations téléchargés sur chaque équipement 4a, 4b, 4c. En complément, le deuxième logiciel de mémorisation 76 est propre à mémoriser une information de validation transmise par le deuxième logiciel d'identification 64 et indiquant si les éléments de configuration ont bien été pris en compte et mémorisés par l'équipement 4a auquel le dispositif 10 est connecté.

Le logiciel de génération 78 est apte à générer un fichier de configuration du serveur 30 à partir des opérations sauvegardées par le deuxième logiciel de mémorisation 76 et, plus généralement, à partir dudit ou desdits éléments téléchargés sur chaque équipement 4a, 4b, 4c et sauvegardées par le deuxième logiciel de mémorisation 76.

L'organe d'export 80 est apte à transmettre au serveur 30 le fichier de configuration généré par le logiciel de génération 78.

Le dispositif 10 permet ainsi de télécharger automatiquement ledit ou lesdits éléments de configuration sur chaque équipement 4a, 4b, 4c sans effectuer d'opérations particulières de la part de l'opérateur, mais simplement en connectant le dispositif 10 à chaque équipement 4a, 4b, 4c. Ledit ou lesdits éléments de configuration correspondent de préférence au moins à des paramètres réseau de référence, tels que l'adresse IP à télécharger sur chaque équipement 4a, 4b, 4c. Le dispositif 10 permet donc une configuration automatique de l'adresse IP de chaque équipement de façon rapide et efficace, en connectant simplement le dispositif 10 à chaque équipement 4a, 4b, 4c.

Dans le cas présenté à la figure 1, la liste des adresses IP à télécharger sur chaque équipement 4a, 4b, 4c est apte à être définie par l'utilisateur, associée à un équipement en particulier, communiquée au dispositif via l'organe de traitement 48 et la table d'allocation, et sauvegardée sur le dispositif grâce au premier logiciel de mémorisation 72.

En variante, le premier logiciel de mémorisation 72 est propre à mémoriser une adresse IP de référence, et le logiciel d'attribution 60 contient une logique automatique d'affectation des paramètres réseau et est ainsi apte à incrémenter d'une valeur de référence l'adresse IP de référence, à chaque connexion du dispositif à l'un des équipements 4a, 4b, 4c, et à attribuer à l'équipement correspondant l'adresse IP de référence une fois celle-ci incrémentée. Ainsi, à chaque connexion du dispositif 10 à l'un des équipements 4a, 4b, 4c, l'adresse IP téléchargée grâce au logiciel de téléchargement 56, sur l'équipement correspondant, est différente, ce qui permet de garantir l'unicité de l'adresse IP de chaque équipement.

Selon une autre variante, le logiciel de mémorisation 72 est propre à mémoriser une adresse IP de référence pour chaque indicateur différent associé à chaque équipement 4a, 4b, 4c, c'est-à-dire par exemple pour chaque type d'équipement différent. Le logiciel d'attribution 60 est alors apte à incrémenter d'une valeur de référence l'adresse IP de référence correspondant à l'indicateur associé à l'équipement auquel le dispositif 10 est connecté, et à attribuer à l'équipement correspondant l'adresse IP de référence incrémentée.

Le dispositif 10 permet donc d'allouer des adresses IP différentes à des équipements 4a, 4b, 4c destinés à appartenir au même réseau, et ceci sans préconfiguration permettant la reconnaissance de l'équipement Ethernet par le dispositif 10.

Par ailleurs, dans le cas où le nombre d'équipements à configurer est important, c'est-à-dire de l'ordre de plusieurs centaines, le dispositif 10 permet de configurer rapidement ces équipements et ceci sans opération particulière, mise à part la connexion du dispositif 10 à chaque équipement 4a, 4b, 4c. Le temps de configuration de chaque équipement est ainsi fortement réduit.

Le choix du mode de fonctionnement du dispositif, c'est-à-dire via une table d'allocation ou bien une incrémentation automatique de l'adresse IP de référence est propre à être sélectionné via l'organe de traitement 48, qui transmet l'information au premier logiciel de mémorisation 72.

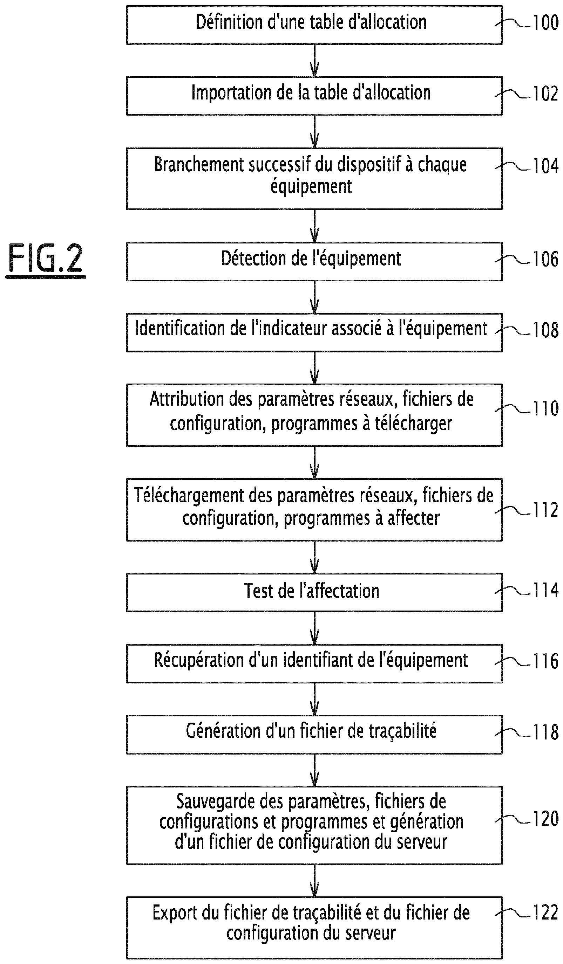

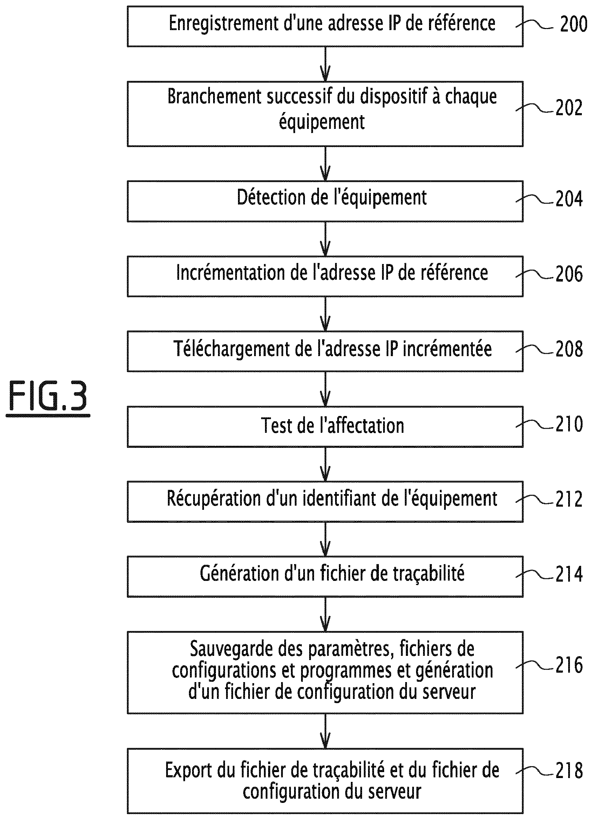

Le fonctionnement du dispositif de configuration 10, selon l'invention, va désormais être expliqué à l'aide des figures 2 et 3, qui correspondent à deux modes de réalisation différents.

Dans le premier mode de réalisation de l'invention, correspondant à la figure 2, lors d'une étape initiale 100, la table d'allocation est calculée et à chaque équipement sont associés, de préférence, des paramètres réseau, un fichier de configuration, et un ou des programmes. Puis, lors d'une étape suivante 102, la table d'allocation est importée depuis le module de configuration 24 vers le dispositif 10 et, plus précisément, par le premier logiciel de mémorisation 72.

Au cours d'une étape 104 suivante, le dispositif 10 est branché successivement à chaque équipement 4a, 4b, 4c.

Suite à chaque branchement, le dispositif 10 effectue automatiquement une étape 106 de détection de l'équipement correspondant via l'utilisation d'un protocole ou plusieurs protocoles Ethernet standardisés ou propriétaires consécutifs jusqu'à ce que l'équipement correspondant 4a soit détecté. Le ou les protocoles Ethernet comprennent par exemple le protocole SNMP (de l'anglais : Simple Network Management Protocol), le protocole DPWS-discovery (de l'anglais : Devices Profile for Web Services - discovery), le protocole DHCP, le protocole BOOTP. En variante, le protocole utilisé consiste en un échange de transaction de trame ARP, ou autres. Un sous-ensemble de ces protocoles devant être supporté parallèlement par le dispositif 10 il peut les utiliser successivement tant qu'une transaction d'échange n'a pas aboutie.

En cas de transmission de trames DHCP/BOOTP par l'équipement, le logiciel d'attribution 60 des paramètres réseau se sert de ces protocoles DHCP/BOOTP uniquement pour détecter la présence de l'équipement et par la suite y télécharger les paramètres réseau, mais va ensuite dévalider l'utilisation de ces protocoles DHCP/BOOTP pour éviter que, lors d'une prochaine mise sous tension de l'équipement, celui-ci ne relance une nouvelle requête DHCP/BOOTP et n'efface de sa mémoire la configuration des paramètres réseau précédemment téléchargé par le dispositif. En effet on rappelle que le l'intérêt du dispositif est de télécharger des paramètres réseau Ethernet pour les architectures réseaux non encore construites.

Puis, lors d'une étape 108, le dispositif 10, et plus particulièrement le premier logiciel d'identification 62, identifie l'indicateur associé à l'équipement correspondant, qui permet de connaître par exemple le type du dispositif et ainsi de savoir quel fichier de configuration, quel ou quels programmes et quels paramètres réseau télécharger sur l'équipement correspondant, à partir de la table d'allocation, si cette information complémentaire mais non obligatoire dans le fonctionnement du dispositif a été préalablement indiqué par l'opérateur.

Lors d'une étape suivante 110, le logiciel d'attribution 60 attribue ledit ou lesdits éléments à télécharger sur chaque équipement, en fonction de la table d'allocation et de l'indicateur identifié pour chaque équipement.

Puis, dans une étape 112, le dispositif 10 télécharge sur l'équipement 4a, 4b, 4c correspondant, via le logiciel de téléchargement 56, les paramètres réseau, le fichier de configuration et le ou les programmes, associés dans la table d'allocation, à l'équipement correspondant et à l'indicateur de l'équipement, et attribués lors de l'étape d'attribution 110.

Puis, suite à l'étape 112 de téléchargement, lors d'une étape 114, le dispositif 10 teste que l'affectation de paramètres réseau a bien été effectuée, en se connectant à l'équipement à partir des paramètres réseau configurés lors de l'étape de téléchargement 112. Les paramètres réseau configurés sont compris dans la table d'allocation. Afin d'indiquer à l'opérateur si l'affectation des paramètres réseau a bien été effectuée, le dispositif 10 et/ou l'équipement correspondant, transmettent un signal à l'opérateur, via par exemple la commande d'une LED, non représentée, et appartenant au dispositif 10 ou à l'équipement correspondant.

Ensuite, au cours d'une étape 116, le dispositif 10 récupère, via le deuxième logiciel d'identification 64, l'identifiant unique de l'équipement auquel il est connecté, et est ainsi propre à associer à chaque opération effectuée, lors de l'étape de téléchargement 112, l'identifiant de l'équipement correspondant.

Lors d'une étape 118, un fichier de traçabilité des opérations effectuées est généré et associe l'identifiant de l'équipement à chaque opération sauvegardée.

Puis, au cours d'une étape 120, le dispositif 10 sauvegarde les paramètres réseau, les fichiers de configuration et/ou le programmes téléchargés lors de l'étape de téléchargement 112, et génère le fichier de configuration du serveur 30 à partir de ces éléments.

Enfin, lors d'une étape 122, le fichier de configuration du serveur 30 est exporté, à l'aide de l'organe export 80, vers le serveur 30.

En complément, au cours de l'étape 122, le fichier de traçabilité est exporté, à l'aide de l'organe d'export 80 et de l'émetteur-récepteur 34, ainsi que de l'antenne 36, vers le module de configuration 24.

En complément encore, suite à l'étape 122, les paramètres réseau, les fichiers de configuration et/ou le ou les programmes téléchargés lors de l'étape de téléchargement 112, et sauvegardés lors de l'étape 120, sont transmis au module de configuration 24 et affichés grâce à l'organe d'affichage 46.

Dans le deuxième mode de réalisation représenté à la figure 3, une étape initiale 200 consiste en un enregistrement par le dispositif, et plus précisément par le premier logiciel de mémorisation 72, d'une adresse IP de référence. L'adresse IP de référence correspond, par exemple, à la valeur de la première adresse IP à utiliser et à télécharger.

En complément et comme présenté pour le premier mode de réalisation, au cours de l'étape 200 d'enregistrement, le dispositif 10 enregistre les éléments de configuration pour chaque équipement 4a, 4b, 4c, lesdits éléments de configuration comprenant, par exemple, un masque de réseau permettant de définir un intervalle d'adresses IP propres à être attribuées par le dispositif aux équipements.

Au cours d'une étape 202 suivante, le dispositif 10 est connecté successivement à chaque équipement.

Puis, suite à chaque connexion, lors d'une étape 204, l'équipement correspondant 4a, 4b, 4c est détecté par le dispositif 10 et une communication s'établit entre l'équipement 4a, 4b, 4c correspondant et le dispositif 10.

Puis, lors d'une étape suivante 206, l'adresse IP est incrémentée de la valeur de référence à partir de l'adresse IP de référence, c'est-à-dire, par exemple, que le dernier chiffre de l'adresse IP de référence est incrémenté de un suite à chaque connexion du dispositif 10 à un équipement. L'adresse IP incrémentée est alors enregistrée comme nouvelle adresse IP de référence.

Au cours d'une étape 208, le dispositif 10 télécharge sur l'équipement correspondant l'adresse IP incrémentée.

Ensuite, le dispositif 10 effectue une étape 210 similaire à l'étape 114 présentée précédemment, ainsi que des étapes 212, 214, 216 et 218 respectivement similaires aux étapes 116, 118, 120 et 122 présentées précédemment, sachant qu'au cours de ces étapes seulement l'adresse IP téléchargée sur l'équipement correspondant est considérée. Plus précisément, au cours de l'étape 214 le fichier de traçabilité associe à chaque téléchargement d'adresse IP, une date et l'identifiant unique de l'équipement correspondant. Au cours de l'étape 216 de sauvegarde, les paramètres sauvegardés sont les adresses IP téléchargées et le fichier de configuration généré comprend ces adresses IP.

Selon une variante, lorsque l'indicateur associé à chaque équipement correspond par exemple au type de l'équipement, lors de l'étape 200 le dispositif 10 enregistre une adresse IP de référence pour chaque indicateur différent. Puis, suite à l'étape 204 et précédemment à l'étape 206, le dispositif 10 réalise des étapes respectivement similaires aux étapes 108, 110. Ensuite, lors de l'étape 206, l'adresse IP est incrémentée de la valeur de référence à partir de l'adresse IP de référence associée à l'indicateur identifié précédemment. L'adresse IP incrémentée est alors enregistrée comme nouvelle adresse IP de référence associée audit indicateur. Puis, au cours de l'étape de téléchargement 208, le dispositif 10 télécharge également sur l'équipement correspondant les éléments de configuration enregistrés au cours de l'étape 200 et associés à l'équipement correspondant. Puis, le dispositif 10 réalise les étapes 210, 212, 214, 216, 218 présentées précédemment.

Selon une autre variante, si au cours de l'étape 206 d'incrémentation, la valeur de l'adresse IP n'est pas comprise dans l'intervalle d'adresse IP défini par le masque de réseau enregistré au cours de l'étape 200, le dispositif est propre à transmettre à l'opérateur un message d'erreur.

Le deuxième mode de réalisation de l'invention permet en fixant simplement une ou des adresses IP de référence, de pouvoir configurer l'adresse IP de tous les équipements à connecter au même réseau. Ainsi, dans le cas où le nombre d'équipements à configurer est important, c'est-à-dire de l'ordre de plusieurs centaines, le deuxième mode de réalisation permet de configurer rapidement ces équipements et ceci sans opération particulière, mise à part la connexion du dispositif 10 à chaque équipement 4a, 4b, 4c.

En outre dans ce deuxième mode de réalisation il n'est pas nécessaire de définir une table d'allocation, il suffit simplement de fixer le ou les adresses IP de référence, cette méthode de configuration est donc simple et rapide à réaliser.

Enfin, à chaque connexion du dispositif 10 à l'un des équipements 4a, 4b, 4c, l'adresse IP téléchargée grâce au logiciel de téléchargement 56, sur l'équipement correspondant, est différente, ce qui permet de garantir l'unicité de l'adresse IP de chaque équipement.

Le deuxième mode de réalisation permet d'affecter de manière simple et rapide une adresse IP à un des équipements Ethernet destinés à appartenir à un réseau sans utiliser :
- des outils dédiés de configuration des adresses IP des équipements impliquant l'usage d'un ordinateur,
- des mécanismes physiques propres aux équipements et permettant de leur associer l'identifiant unique,
- un serveur DHCP,
et avant la constitution physique du réseau Ethernet.

Le dispositif 10 présenté ci-dessus est propre à réaliser les deux modes de réalisation présentés et l'opérateur est, par exemple, propre à choisir le procédé de configuration conforme au premier et au deuxième modes de réalisation suivant son application, les informations dont il dispose et les équipements à configurer.

Les caractéristiques des modes de réalisation envisagés ci-dessus peuvent être combinées entre elles.

## Revendications

1. Dispositif (10) de configuration de plusieurs équipements (4a, 4b, 4c), chaque équipement (4a, 4b, 4c) disposant d'un connecteur Ethernet (14a, 14b, 14c), le dispositif comprenant :
- un connecteur Ethernet (18) complémentaire propre à être connecté successivement à chaque connecteur Ethernet (14a, 14b, 14c) via une liaison point à point (12),
- un premier moyen de mémorisation (72) de paramètres réseau de référence, les paramètres réseau de référence comprenant une adresse IP de référence, et
- un moyen de téléchargement (56) propre à télécharger les paramètres réseau de référence sur chaque équipement (4a, 4b, 4c),
le dispositif comprend :
- un moyen (58) de détection propre à détecter la connexion du dispositif à un équipement (4a, 4b, 4c) correspondant, et
- un moyen (60) d'attribution propre à attribuer, suite à la détection de ladite connexion, une adresse IP unique à l'équipement (4a , 4b, 4c) auquel le dispositif est connecté, sans que l'équipement ait à envoyer une requête de demande d'adresse IP au dispositif,
ladite adresse IP unique étant incluse dans les paramètres réseau de référence destinés à être téléchargés dans l'équipement (4a, 4b, 4c) correspondant, le moyen d'attribution (60) étant propre à incrémenter d'une valeur de référence l'adresse IP de référence pour déterminer l'adresse IP unique associée à l'équipement correspondant, suite à chaque connexion du dispositif à un des équipements (4a, 4b, 4c).

2. Dispositif selon la revendication 1, **caractérisé en ce que** le premier moyen de mémorisation (72) est propre à sauvegarder une table d'allocation comprenant au moins, pour chaque équipement, un élément de configuration choisi parmi : les paramètres réseau de référence, un fichier de configuration et un ou des programmes destinés à être exécutés par les équipements, ledit ou lesdits éléments de configuration étant destinés à être téléchargés sur l'équipement (4a, 4b, 4c) correspondant, **en ce que** le dispositif comprend un moyen (74) de gestion propre à gérer la table d'allocation, **en ce que** le moyen d'attribution (60) est propre à attribuer à l'équipement auquel il est connecté ledit ou lesdits éléments de configuration, en fonction de la table d'allocation, et **en ce que** le moyen de téléchargement (56) est propre à télécharger sur l'équipement auquel il est connecté ledit ou lesdits éléments de configuration attribués.

3. Dispositif selon la revendication 2, **caractérisé en ce qu'**un indicateur est associé à chaque équipement (4a, 4b, 4c), et **en ce que** le dispositif comprend un premier moyen (62) d'identification propre à identifier l'indicateur de l'équipement auquel il est connecté, et **en ce que** ledit ou lesdits éléments de configuration contenus dans la table d'allocation sont fonctions de l'indicateur associé à chaque équipement (4a, 4b, 4c).

4. Dispositif selon la revendication 3, **caractérisé en ce que** les paramètres réseau de référence comprennent une adresse IP de référence pour chaque indicateur différent, et **en ce que**, suite à chaque connexion du dispositif à l'un des équipements (4a, 4b, 4c), le moyen d'attribution (60) est propre à incrémenter d'une valeur de référence l'adresse IP de référence associée à l'indicateur de l'équipement correspondant pour déterminer l'adresse IP unique associée à l'équipement correspondant.

5. Dispositif selon l'une des revendications précédentes, **caractérisé en ce que** le dispositif comprend un deuxième moyen (64) d'identification propre à récupérer un identifiant de chaque équipement, l'identifiant étant unique pour chaque équipement, **en ce que** le dispositif comprend un deuxième moyen (76) de mémorisation propre à sauvegarder chaque opération effectuée par le moyen de téléchargement (56) et à générer un fichier de traçabilité des opérations effectuées, et **en ce qu'**à chaque équipement (4a, 4b, 4c) et à chaque opération sauvegardée, le deuxième moyen de mémorisation (76) associe l'identifiant unique de l'équipement correspondant.

6. Dispositif selon les revendications 2 et 5, **caractérisé en ce que** le deuxième moyen de mémorisation (76) est propre à sauvegarder ledit ou lesdits éléments de configuration téléchargés sur chaque équipement (4a, 4b, 4c), et **en ce que** le dispositif comprend un serveur (30), propre à télécharger à nouveau ledit ou lesdits élément sur chaque équipement (4a, 4b, 4c), un moyen (78) de génération apte à générer un fichier de configuration du serveur (30) à partir dudit ou desdits éléments sauvegardés par le deuxième moyen de mémorisation (76), et un organe (80) d'export du fichier de configuration vers le serveur (30).

7. Dispositif selon l'une des revendications précédentes, **caractérisé en ce que** le dispositif est portable et comprend une alimentation électrique (32) autonome, et **en ce que** le dispositif comprend un moyen (30, 36) de communication sans fil.

8. Procédé de configuration de plusieurs équipements (4a, 4b, 4c) à l'aide d'un dispositif (10) de configuration, chaque équipement (4a, 4b, 4c) disposant d'un connecteur Ethernet (14a, 14b, 14c), le dispositif comprenant un connecteur Ethernet (16) complémentaire propre à être connecté successivement à chaque connecteur (14a, 14b, 14c) Ethernet via une liaison point à point (12), le procédé comprenant les étapes suivantes :
- a) la mémorisation (102 ; 200) de paramètres réseau de référence, les paramètres réseau de référence comprenant une adresse IP de référence,
- b) le branchement (104 ; 202) successif du dispositif à chaque équipement,
- c) le téléchargement (112 ; 208) des paramètres réseau de référence sur chaque équipement (4a, 4b, 4c),
le procédé comprend, précédemment à l'étape de téléchargement (112 ; 208) et après l'étape de branchement (104 ; 202), les étapes suivantes :
- b1) la détection (106 ; 204) par le dispositif de la connexion à l'équipement (4a, 4b, 4c) auquel il est connecté, et
- b2) l'attribution (110 ; 206) par le dispositif, suite à la détection de ladite connexion, d'une adresse IP unique à l'équipement auquel le dispositif est connecté, sans que l'équipement ait à envoyer une requête de demande d'adresse IP au dispositif,
ladite adresse IP unique étant incluse dans les paramètres réseau de référence à télécharger dans l'équipement correspondant, l'adresse IP de référence étant incrémentée d'une valeur de référence pour déterminer l'adresse IP unique associée à l'équipement correspondant, suite à chaque connexion du dispositif à un des équipements (4a, 4b, 4c).

9. Procédé selon la revendication 8, **caractérisé en ce que** précédemment à l'étape de mémorisation (102) le procédé comprend l'étape suivante :
- a1) la définition d'une table d'allocation comprenant au moins, pour chaque équipement, un élément de configuration choisi parmi : les paramètres réseau de référence, un fichier de configuration et un ou des programmes destinés à être exécutés par les équipements, ledit ou lesdits éléments de configuration étant destinés à être téléchargés sur l'équipement (4a, 4b, 4c) auquel le dispositif est connecté,
**en ce qu'**au cours de l'étape d'attribution (110) le dispositif attribue à l'équipement auquel il est connecté ledit ou lesdits éléments de configuration, en fonction de la table d'allocation, et **en ce qu'**au cours de l'étape de téléchargement (112), le moyen de téléchargement (56) télécharge sur l'équipement correspondant ledit ou lesdits éléments attribués.

10. Procédé selon la revendication 9, **caractérisé en ce que** lors de l'étape de définition (100), les informations contenues dans la table d'allocation sont fonctions d'un indicateur associé à chaque équipement (4a, 4b, 4c), **en ce qu'**après l'étape de détection (106), le procédé comprend une étape suivante consistant en :
- l'identification (108) de l'indicateur de l'équipement auquel il est connecté,
et **en ce que** lors de l'étape d'attribution (110), ledit ou lesdits éléments de configuration attribués dépendent de l'indicateur de l'équipement (4a, 4b, 4c) auquel le dispositif est connecté.

11. Procédé selon la revendication 10, **caractérisé en ce que** lors de l'étape de mémorisation (200), un utilisateur enregistre dans le dispositif une adresse IP de référence pour chaque indicateur différent, **en ce que** suite à chaque branchement du dispositif à l'un des équipements (4a, 4b, 4c), le dispositif réalise les étapes d'identification, d'attribution (206) et de téléchargement (208), **en ce que**, lors de l'étape d'attribution (206), l'adresse IP de référence associée à l'indicateur de l'équipement, identifié lors de l'étape d'identification, est incrémentée d'une valeur de référence, et **en ce qu'**au cours de l'étape de téléchargement (208), l'adresse IP de référence incrémentée est téléchargée sur l'équipement (4a, 4b, 4c) auquel le dispositif est connecté et enregistrée comme nouvelle adresse IP de référence associée à l'indicateur correspondant.

12. Procédé selon l'une des revendications 8 à 11, **caractérisé en ce que** suite à l'étape de téléchargement (112 ; 208), le dispositif réalise une étape suivante consistant en :
- le test (114 ; 210) que le téléchargement de paramètres réseau a bien été effectué, en connectant le dispositif à l'équipement à partir des paramètres réseau téléchargés lors de l'étape de téléchargement (112 ; 208).

13. Procédé selon la revendication 9 ou 10, **caractérisé en ce que** le dispositif comprend un serveur (30) propre à télécharger à nouveau ledit ou lesdits éléments sur chaque équipement (4a, 4b, 4c), **en ce que** suite à chaque étape de téléchargement (112 ; 208) le dispositif réalise les étapes suivantes :
- la sauvegarde 120 ; 216) dudit ou desdits éléments de configuration téléchargés sur chaque équipement (4a, 4b, 4c),
- la génération (118 ; 214) d'un fichier de configuration du serveur à partir des éléments de configuration sauvegardés, et
- l'export (122 ; 218) du fichier de configuration vers le serveur.

## Patentansprüche

1. Vorrichtung (10) zum Konfigurieren von mehreren Geräten (4a, 4b, 4c), wobei jedes Gerät (4a, 4b, 4c) über einen Ethernetverbinder (14a, 14b, 14c) verfügt, wobei die Vorrichtung Folgendes umfasst:
- einen zusätzlichen Ethernetverbinder (18), der dafür eingerichtet ist, über eine Punkt-zu-Punkt-Verbindung (12) nacheinander mit jedem Ethernetverbinder (14a, 14b, 14c) verbunden zu werden,
- ein erstes Mittel zum Speichern (72) von Referenznetzparametern, wobei die Referenznetzparameter eine Referenz-IP-Adresse umfassen, und
- ein Mittel zum Herunterladen (56), das dafür eingerichtet ist, die Referenznetzparametern auf jedes Gerät (4a, 4b, 4c) herunterzuladen,
wobei die Vorrichtung Folgendes umfasst:
- ein Detektionsmittel (58), das dafür eingerichtet ist, die Verbindung der Vorrichtung mit einem entsprechenden Gerät (4a, 4b, 4c) zu detektieren, und
- ein Zuweisungsmittel (60), das dafür eingerichtet ist, nach der Detektion der Verbindung dem Gerät (4a, 4b, 4c), mit dem die Vorrichtung verbunden ist, eine eindeutige IP-Adresse zuzuweisen, ohne dass das Gerät eine IP-Adressen-Anforderung an die Vorrichtung senden muss, wobei die eindeutige IP-Adresse in den Referenznetzparametern enthalten ist, die dazu bestimmt sind, in das entsprechende Gerät (4a, 4b, 4c) heruntergeladen zu werden, wobei das Zuweisungsmittel (60) dafür eingerichtet ist, die Referenz-IP-Adresse um einen Referenzwert zu inkrementieren, um nach jeder Verbindung der Vorrichtung mit einem der Geräte (4a, 4b, 4c) die eindeutige IP-Adresse zu bestimmen, die mit dem entsprechenden Gerät verknüpft ist.

2. Vorrichtung nach Anspruch 1, **dadurch gekennzeichnet, dass** das erste Speichermittel (72) dafür eingerichtet ist, eine Zuordnungstabelle zu sichern, die wenigstens für jedes Gerät ein Konfigurationselement umfasst, das ausgewählt ist aus: den Referenznetzparametern, einer Konfigurationsdatei und einem Programm oder Programmen, die dazu bestimmt sind, durch die Geräte ausgeführt zu werden, wobei das oder die Konfigurationselemente dazu bestimmt sind, auf das entsprechende Gerät (4a, 4b, 4c) heruntergeladen zu werden, dass die Vorrichtung ein Verwaltungsmittel (74) umfasst, das dafür eingerichtet ist, die Zuordnungstabelle zu verwalten, dass das Zuweisungsmittel (60) dafür eingerichtet ist, dem Gerät, mit dem sie verbunden ist, das oder die Konfigurationselemente als Funktion der Zuordnungstabelle zuzuweisen, und dass das Mittel zum Herunterladen (56) dafür eingerichtet ist, auf das Gerät, mit dem sie verbunden ist, das oder die zugewiesenen Konfigurationselemente herunterzuladen.

3. Vorrichtung nach Anspruch 2, **dadurch gekennzeichnet, dass** ein Indikator mit jedem Gerät (4a, 4b, 4c) verknüpft ist und dass die Vorrichtung ein erstes Identifikationsmittel (62) umfasst, das dafür eingerichtet ist, den Indikator des Geräts, mit dem sie verbunden ist, zu identifizieren, und dass das oder die Konfigurationselemente, die in der Zuordnungstabelle enthalten sind, eine Funktion des mit jedem Gerät (4a, 4b, 4c) verknüpften Indikators sind.

4. Vorrichtung nach Anspruch 3, **dadurch gekennzeichnet, dass** die Referenznetzparameter eine Referenz-IP-Adresse für jeden unterschiedlichen Indikator umfassen, und dass nach jeder Verbindung der Vorrichtung mit einem der Geräte (4a, 4b, 4c) das Zuweisungsmittel (60) dafür eingerichtet ist, die Referenz-IP-Adresse, die mit dem Indikator des entsprechenden Geräts verknüpft ist, um einen Referenzwert zu inkrementieren, um die eindeutige IP-Adresse zu identifizieren, die mit dem entsprechenden Gerät verknüpft ist.

5. Vorrichtung nach einem der vorhergehenden Ansprüche, **dadurch gekennzeichnet, dass** die Vorrichtung ein zweites Identifikationsmittel (64) umfasst, das dafür eingerichtet ist, einen Identifikator jedes Geräts wiederzugewinnen, wobei der Identifikator für jedes Gerät eindeutig ist, dass die Vorrichtung ein zweites Speichermittel (76) umfasst, das dafür eingerichtet ist, jeden Vorgang zu sichern, der durch das Mittel zum Herunterladen (56) durchgeführt wird, und eine Datei für die Rückverfolgbarkeit der durchgeführten Vorgänge zu erzeugen, und dass bei jedem Gerät (4a, 4b, 4c) und bei jedem gesicherten Vorgang das zweite Speichermittel (76) den eindeutigen Identifikator des entsprechenden Geräts verknüpft.

6. Vorrichtung nach den Ansprüchen 2 und 5, **dadurch gekennzeichnet, dass** das zweite Speichermittel (76) dafür eingerichtet ist, das oder die auf jedes Gerät (4a, 4b, 4c) heruntergeladenen Konfigurationselemente zu sichern, und dass die Vorrichtung Folgendes umfasst: einen Server (30), der dafür eingerichtet ist, das oder die Elemente erneut auf jedes Gerät (4a, 4b, 4c) herunterzuladen, ein Erzeugungsmittel (78), das imstande ist, eine Konfigurationsdatei des Servers (30) ausgehend von dem oder den durch das zweite Speichermittel (76) gesicherten Elementen zu erzeugen, und ein Organ (80) zum Export der Konfigurationsdatei zum Server (30).

7. Vorrichtung nach einem der vorhergehenden Ansprüche, **dadurch gekennzeichnet, dass** die Vorrichtung tragbar ist und eine unabhängige Stromversorgung (32) umfasst, und dass die Vorrichtung ein Mittel (30, 36) zur Drahtloskommunikation umfasst.

8. Verfahren zum Konfigurieren mehrerer Geräte (4a, 4b, 4c) mithilfe einer Konfigurationsvorrichtung (10), wobei jedes Gerät (4a, 4b, 4c) über einen Ethernetverbinder (14a, 14b, 14c) verfügt, wobei die Vorrichtung einen zusätzlichen Ethernetverbinder (16) umfasst, der dafür eingerichtet ist, über eine Punkt-zu-Punkt-Verbindung (12) nacheinander mit jedem Ethernetverbinder (14a, 14b, 14c) verbunden zu werden, wobei das Verfahren die folgenden Schritte umfasst:
a) Speichern (102; 200) von Referenznetzparametern, wobei die Referenznetzparameter eine Referenz-IP-Adresse umfassen,
b) aufeinanderfolgendes Anschließen (104; 202) der Vorrichtung an jedes Gerät,
c) Herunterladen (112; 208) von Referenznetzparametern auf jedes Gerät (4a, 4b, 4c),
wobei das Verfahren vor dem Schritt des Herunterladens (112; 208) und nach dem Schritt des Anschließens (104; 202) die folgenden Schritte umfasst:
b1) Detektieren (106; 204), durch die Vorrichtung, der Verbindung mit dem Gerät (4a, 4b, 4c), mit dem es verbunden ist, und
b2) Zuweisen (110; 206), durch die Vorrichtung, nach dem Detektieren der Verbindung, einer eindeutigen IP-Adresse zu dem Gerät, mit dem die Vorrichtung verbunden ist, ohne dass das Gerät eine IP-Adressen-Anforderung an die Vorrichtung senden muss, wobei die eindeutige IP-Adresse in den Referenznetzparametern enthalten ist, die in das entsprechende Gerät herunterzuladen sind, wobei die Referenz-IP-Adresse um einen Referenzwert inkrementiert wird, um nach jeder Verbindung der Vorrichtung mit einem der Geräte (4a, 4b, 4c) die eindeutige IP-Adresse zu bestimmen, die mit dem entsprechenden Gerät verknüpft ist.

9. Verfahren nach Anspruch 8, **dadurch gekennzeichnet, dass** vor dem Schritt des Speicherns (102) das Verfahren den folgenden Schritt umfasst:
a1) Definieren einer Zuordnungstabelle, die wenigstens für jedes Gerät ein Konfigurationselement umfasst, das ausgewählt ist aus: den Referenznetzparametern, einer Konfigurationsdatei und einem Programm oder Programmen, die dazu bestimmt sind, durch die Geräte ausgeführt zu werden, wobei das oder die Konfigurationselemente dazu bestimmt sind, auf das entsprechende Gerät (4a, 4b, 4c) heruntergeladen zu werden, mit dem die Vorrichtung verbunden ist,
dass während des Schritts des Zuweisens (110) die Vorrichtung dem Gerät, mit dem sie verbunden ist, das oder die Konfigurationselemente als Funktion der Zuordnungstabelle zuweist, und dass während des Schritts des Herunterladens (112) das Mittel zum Herunterladen (56) das oder die zugewiesenen Elemente auf das entsprechende Gerät herunterlädt.

10. Verfahren nach Anspruch 9, **dadurch gekennzeichnet, dass** beim Schritt des Definierens (100) die in der Zuordnungstabelle enthaltenen Informationen die Funktion eines mit jedem Gerät (4a, 4b, 4c) verknüpften Indikators sind, dass nach dem Schritt des Detektierens (106) das Verfahren einen folgenden Schritt umfasst, der in Folgendem besteht:
- Identifizieren (108) des Indikators des Geräts, mit dem sie verbunden ist,
und dass beim Schritt des Zuweisens (110) das oder die zugewiesenen Konfigurationselemente vom Indikator des Geräts (4a, 4b, 4c) abhängen, mit dem die Vorrichtung verbunden ist.

11. Verfahren nach Anspruch 10, **dadurch gekennzeichnet, dass** beim Schritt des Speicherns (200) ein Benutzer in der Vorrichtung eine Referenz-IP-Adresse für jeden unterschiedlichen Indikator aufzeichnet, dass nach jedem Anschluss der Vorrichtung an eines der Geräte (4a, 4b, 4c) die Vorrichtung die Schritte des Identifizierens, des Zuweisens (206) und des Herunterladens (208) durchführt, dass beim Schritt des Zuweisens (206) die mit dem Indikator des Geräts verknüpfte Referenz-IP-Adresse, die beim Schritt des Identifizierens identifiziert wurde, um einen Referenzwert inkrementiert wird, und dass beim Schritt des Herunterladens (208) die inkrementierte Referenz-IP-Adresse auf das Gerät (4a, 4b, 4c) heruntergeladen wird, mit dem die Vorrichtung verbunden ist, und als neue Referenz-IP-Adresse aufgezeichnet wird, die mit dem entsprechenden Indikator verknüpft ist.

12. Verfahren nach einem der Ansprüche 8 bis 11, **dadurch gekennzeichnet, dass** nach dem Schritt des Herunterladens (112; 208) das Verfahren einen folgenden Schritt ausführt, der in Folgendem besteht:
- Testen (114; 210), ob das Herunterladen von Netzparametern ordnungsgemäß erfolgt ist, indem die Vorrichtung auf Basis der Netzparameter, die beim Schritt des Herunterladens (112; 208) heruntergeladen wurden, mit dem Gerät verbunden wird.

13. Verfahren nach Anspruch 9 oder 10, **dadurch gekennzeichnet, dass** die Vorrichtung einen Server (30) umfasst, der dafür eingerichtet ist, das oder die Elemente erneut auf jedes Gerät (4a, 4b, 4c) herunterzuladen, dass nach jedem Schritt des Herunterladens (112; 208) die Vorrichtung die folgenden Schritte ausführt:
- Sichern (120; 216) des oder der auf jedes Gerät (4a, 4b, 4c) heruntergeladenen Konfigurationselemente,
- Erzeugen (118; 214) einer Konfigurationsdatei des Servers auf Basis der gesicherten Konfigurationselemente, und
- Exportieren (122; 218) der Konfigurationsdatei zum Server.

## Claims

1. A configuration device (10) for configuring a plurality of equipment units (4a, 4b, 4c), each equipment unit (4a, 4b, 4c) having an Ethernet connector (14a, 14b, 14c), the configuration device comprising:
- a mating Ethernet connector (18) capable of being connected successively to each Ethernet connector (14a, 14b, 14c) via a point to point link,
- a first recording and storage means (72) for recording and storing the reference network settings, and
- a downloading means (56) capable of downloading the reference network settings on to each equipment unit (4a, 4b, 4c),
the configuration device comprises:
- a detection means (58) capable of detecting the connection of the configuration device to a corresponding equipment unit (4a, 4b, 4c), and
- an assignment means (60) capable of assigning, following the detection of the said connection, a unique IP address to the equipment unit (4a, 4b, 4c) to which the configuration device is connected, without the equipment unit (4a, 4b, 4c) having to send to the device a request for asking an IP address , the said unique IP address being included in the reference network settings meant to be downloaded into the corresponding equipment unit (4a, 4b, 4c), the assignment means (60) being capable of incrementing by a reference value the reference IP address in order to determine the unique IP address associated with the corresponding equipment unit, following each connection made by the configuration device to one of the equipment units (4a, 4b, 4c).

2. A configuration device according to claim 1, **characterised in that** the first recording and storage means (72) is capable of saving and storing an assignment table comprising of at least, for each equipment unit, one configuration element selected from among: the reference network settings, a configuration file and one or more programmes meant to be executed by the equipment units, the said one or more configuration elements being meant to be downloaded on to the corresponding equipment unit (4a, 4b, 4c), **in that** the configuration device includes a management means (74) capable of managing the assignment table, **in that** the assignment means (60) is capable of assigning to the equipment unit to which it is connected, the said one or more configuration elements, based on the assignment table, and **in that** the downloading means (56) is capable of downloading on to the equipment unit to which it is connected the one or more configuration elements assigned.

3. A configuration device according to claim 2, **characterised in that** an indicator is associated with each equipment unit (4a, 4b, 4c), **in that** the configuration device comprises a first identification means (62) capable of identifying the indicator of the equipment unit to which it is connected, and **in that** the said one or more configuration elements contained in the assignment table are functions of the indicator associated with each equipment unit (4a, 4b, 4c).

4. A configuration device according to claim 3, **characterised in that** the reference network settings include a reference IP address for each different indicator, and **in that**, following each connection made by the configuration device to one of the equipment units, (4a, 4b, 4c), the assignment means (60) is capable of incrementing by a reference value the reference IP address associated with the indicator of the corresponding equipment unit in order to determine the unique IP address associated with the corresponding equipment unit.

5. A configuration device according to any one of the preceding claims, **characterised in that** the configuration device comprises a second identification means (64) capable of retrieving an identifier of each equipment unit, the identifier being unique for each equipment unit, **in that** the configuration device includes a second recording and storage means (76) capable of saving and storing each operation executed by the downloading means (56) and capable of generating a traceability file for the operations performed, and **in that** the second recording and storage means (76) associates the unique identifier of the corresponding equipment unit with each equipment unit (4a, 4b, 4c) and with each operation saved and stored.

6. A configuration device according to claim 2 and 5, **characterised in that** the second recording and storage means (76) is capable of saving and storing the said one or more configuration elements downloaded on to each equipment unit (4a, 4b, 4c), and **in that** the configuration device includes a server (30), capable of again downloading the said one or more configuration elements on to each equipment unit (4a, 4b, 4c), a generation means (78) capable of generating a configuration file from the server (30) based on the said one or more configuration elements saved and stored by the second recording and storage means (76) and a file export member (80) for exporting the configuration file to the server (30).

7. A configuration device according to any one of the preceding claims, **characterised in that** the configuration device is portable and comprises an autonomous electrical power supply (32), and **in that** configuration the device also comprises a wireless communication means (30, 36).

8. A configuration method for configuring a plurality of equipment units (4a, 4b, 4c) by making use of a configuration device (10), each equipment unit (4a, 4b, 4c) having an Ethernet connector (14a, 14b, 14c), the configuration device comprising a mating Ethernet connector (16) capable of being connected successively to each Ethernet connector (14a, 14b, 14c) via a point to point link, the method comprising of the following steps
- a) the saving and storing (102; 200) of reference network settings,
- b) the successive connection (104; 202) of the configuration device to each equipment unit,
- c) the downloading (112; 208) of the reference network settings on to each equipment unit (4a, 4b, 4c),
the method includes, prior to the step of downloading (112, 208) and after the step of connecting (104; 202), the following steps of
- b1) the detection (106; 204) by the configuration device of the connection to the equipment unit (4a, 4b, 4c) to which it is connected, and
- b2) the assignment (110; 206) by the configuration device, following the detection of the said connection, of a unique IP address to the equipment unit to which the configuration device is connected, without the equipment unit (4a, 4b, 4c) having to send to the device a request for asking an IP address, the said unique IP address being included in the reference network settings to be downloaded into the corresponding equipment unit (4a, 4b, 4c), the assignment means (60) being capable of incrementing by a reference value the reference IP address in order to determine the unique IP address associated with the corresponding equipment unit, following each connection made by the configuration device to one of the equipment units (4a, 4b, 4c).

9. A method according to claim 8, **characterised in that** prior to the step of recording and storing (102) the method includes the following step
- a1) the definition of an assignment table comprising of at least, for each equipment unit, one configuration element selected from among the reference network settings, a configuration file and one or more programmes meant to be executed by the equipment units, the said one or more configuration elements being meant to be downloaded on to the corresponding equipment unit (4a, 4b, 4c) to which the configuration device is connected,
**in that** during the step of assignment (110) the configuration device assigns to the equipment unit to which it is connected the said one or more configuration elements, based on the assignment table, and **in that** during the step of downloading (112), the downloading means (56) downloads on to the corresponding equipment unit the said one or more configuration elements assigned.

10. A method according to claim 9, **characterised in that** during the step of definition (100), the data and information contained in the assignment table are functions of an indicator associated with each equipment unit (4a, 4b, 4c), **in that** after the detection step (106), the method includes a further step consisting of
- the identification (108) of the indicator of the equipment unit to which it is connected, and **in that** during the assigning step (110), the said one or more configuration elements assigned depend on the indicator of the equipment unit (4a, 4b, 4c) to which the configuration device is connected.

11. A method according to claim 10, **characterised in that** during the step of recording and storing (200), a user records and stores in the configuration device a reference IP address for each different indicator, **in that** following each connection made by the configuration device to one of the equipment units (4a, 4b, 4c), the configuration device performs the steps of identification, assignment (206) and downloading (208), **in that**, during the assignment step (206), the reference IP address associated with the indicator of equipment unit, identified during the identification step, is incremented by a reference value, and **in that** during the downloading step (208), the incremented reference IP address is downloaded on to the equipment unit (4a, 4b, 4c) to which the configuration device is connected and recorded and stored as the new reference IP address associated with the corresponding indicator.

12. A method according to one of claims 8 to 11, **characterised in that** following the step of downloading (112; 208), the configuration device performs a subsequent step consisting of
- the test (114, 210) to ensure that the downloading of network settings has been successfully performed, by connecting the configuration device to the equipment unit based on using the network settings downloaded during the downloading step (112, 208).

13. A method according to claim 9 or 10, **characterised in that** the configuration device includes a server (30) capable of again downloading the said one or more configuration elements on to each equipment unit (4a, 4b, 4c), and **in that** following each step of downloading (112; 208) the configuration device carries out the following steps
- the saving and storing (120; 216) of the said one or more configuration elements downloaded on to each equipment unit (4a, 4b, 4c),
- the generation (118; 214) of a configuration file from the server based on the configuration elements saved and stored, and
- the exporting (122; 218) of the configuration file to the server.
